(19) Europäisches Patentamt
European Patent Office
Office européen des brevets

(11) **EP 4 759 647 A1**

(12) **EUROPEAN PATENT APPLICATION**

(43) Date of publication:
**17.06.2026 Bulletin 2026/25**

(21) Application number: **24218681.5**

(22) Date of filing: **10.12.2024**

(51) International Patent Classification (IPC):
**B60T 8/17** *(2006.01)*  **B60T 8/1761** *(2006.01)*
**B60T 8/1766** *(2006.01)*  **B60T 8/90** *(2006.01)*

(52) Cooperative Patent Classification (CPC):
**B60T 8/90; B60T 8/1708; B60T 8/17616;**
**B60T 8/1766; B60T 8/1806; B60T 13/683;**
B60T 2240/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **KB Intellectual Property GmbH & Co.
KG**
**82049 Pullach (DE)**

(72) Inventor: **JUNDT, Oliver**
**74394 Hessigheim (DE)**

(54) **BRAKE SYSTEM AND METHOD FOR CONTROLLING A BRAKE PRESSURE**

(57)     A brake system (100) for a vehicle is disclosed. The vehicle includes at least one axle (10) for which wheel-speed information is not available, and a reference axle (20) for which wheel-speed information is available, the at least one axle (10) includes brake cylinders (11, 12) and a relay valve (15) controllable to provide a target pressure (Pt) to the brake cylinders (11, 12). The brake system (100) comprises an electronic pressure module, EPM, (110) with an output (111) configured to control the relay valve (15) of the at least one axle (10) to provide the target pressure (Pt); and an electronic controller (120) configured control the EPM (110) based on an estimate for the target pressure (Pt), the estimate being derived from data associated with the reference axle (20).

Fig. 1

EP 4 759 647 A1

**Description**

The present invention relates to a brake system, to a commercial vehicle, and to a method for controlling a brake pressure at one or more axles that are not sensed to provide wheel speed information and, in particular, to a brake pressure control of a commercial vehicle axis without a wheel speed sensor.

Electronic brake systems, EBS, of commercial vehicles are able to control electronically a brake pressure at axles or wheels utilizing electronic pressure modules (or electro pneumatic modulators), EPM. Optionally, additional pressure control valves may be installed to enable a wheel-specific pressure control. Wheel speed information, e.g. from wheel speed sensors, are an important input for determining a target value for the brake pressure (target pressure). Additionally, a load of the vehicle and/or a road friction acting on the respective axle or wheels are likewise input data that influence the target pressure. These quantities can either be measured (e.g. the wheel speed or the load) or estimated (e.g. the friction coefficient).

During braking the wheels should not block to achieve a highest possible brake action. To ensure this with anti-lock system, ABS, wheel speed sensors are needed. However, some of the axles may not have wheel speed sensors. These axles will be called in this disclosure as unsensed axles. For those axles, an optimal target brake pressure cannot easily be determined. In some cases, such axles are pneumatically coupled to other axles. For example, a select-low valve can be used to take the lowest pressure from the left and right side which is then applied to the axle without wheel speed sensor. Disadvantages of this solution are tolerated if there are multiple or more axles with wheel speed sensors. However, in certain markets, vehicle manufacturers arrange multiple unsensed axles at the vehicle so that the "select-low control" is not applicable or is not tolerable anymore and is sometimes even against the regulations.

Therefore, there is a demand for a brake system which allows to estimate the brake pressure to an axle without a wheel speed sensor, and which is applicable even to cases with multiples axles without a wheel speed sensor.

At least some of these problems of the conventional brake systems are overcome by a brake system of claim 1 or a method according to claim 11. The dependent claims refer to further advantageous realizations of the subject matter of the independent claims.

The present invention relates to a brake system for a vehicle (e.g., a commercial vehicle such as a truck, a tractor, a bus, a towing vehicle etc.). The vehicle includes at least one axle for which wheel-speed information is not available and a reference axle for which wheel-speed information is available (e.g. having at least one sensor). The at least one axle includes brake cylinders and an optional relay valve controllable to provide a target pressure to the brake cylinders. The brake system comprises an electronic pressure module, EPM, and an electronic controller. The EPM comprises a (single) output configured to control a target pressure at the at least one axle. The electronic controller is configured to control the one-channel EPM based on an estimate for the target pressure. The estimate is derived from data associated with the reference axle.

Optionally, the EPM includes one or more one-channel EPMs each having a one-channel output as the output. The EPM may also be a two-channel EPM, wherein the output is one of its two output channels (the other outputs may not be used or for different purposes). Optionally, the output of the EPM is configured to control the optional relay valve. However, as long as only a single axle needs to be controlled, a relay valve is not needed. The EPM itself may provide sufficient pressured air volume for a single axle. However, when the brake pressure of multiple axles shall be controlled, relay valves are advantageously installed at one or more those axles.

It is understood that a one-channel EPM may control only a single pressure to be applied on brake cylinders in the same way (e.g. on a left-hand side and right-hand side), whereas a two-channel EPM may control two pressures independently to applied on difference axles, for example. It is further understood that each axle has at least two wheels and associated brake cylinders. As a default, a brake pressure of the EPM for an axle is supplied on both sides to ensure uniform braking. Therefore, a one-channel EPM may be sufficient for one axle, which is a cost-efficient solution. If for some reasons (e.g. due different friction or stability reasons) the brake pressure shall be different on both sides, respective pressure control valves may be utilized.

Optionally, the at least one axle includes multiple axles, wherein each of the multiple axles comprises a respective relay valve and associated brake cylinders (on the right-hand side and left-hand side). The EPM may then be configured to control each of the multiple relay valves through its one output channel (e.g., with the same pressure). Accordingly, the electronic controller may be configured to determine the estimate based (at least) on a number of the multiple axles.

The term electronic controller should be understood broadly. It may be any electronic control unit, ECU, in the vehicle that is able to provide the controlling. Likewise, the electronic controller may comprise or may be part of multiple ECUs. It may even be inside a housing of the one-channel or two-channel EPM (e.g. as an integrated component) or may be located at a remote location somewhere in the vehicle.

The vehicle may provide a vehicle information system which provides one or more of the following: brake pressures applied at some or all brake cylinders of the vehicle, a load, loads at axles (e.g. via load sensors), acceleration values, a status of anti-lock system, ABS, a status of a traction control, ASR, when applied on the reference axle. This information may be accessible, e.g. via a controlled area network (CAN), and may be provided by various components such as ECUs, an electronic stabilization program, ESP, driving assist systems (e.g. a traction control), autonomous driving system etc.

Optionally, the electronic controller is further configured to obtain information from the vehicle information system, wherein one or more of the following can be utilized as data for the estimate of the target pressure Pt:

- a minimum of brake pressures, Pmin, applied at each side of the reference axle,
- an application of the ABS at the reference axle,
- if the ABS application is detected, utilized brake pressures from the reference axle are filtered with a predefined time constant (e.g. to filter out high-frequency pressure fluctuations when the ABS is applied),
- if the ABS application is detected, utilized brake pressures at the reference axles are increased by a predetermined factor and the estimated target pressure Pt is applied periodically to the at least one axle to generate an open loop ABS actuation (e.g. without having a feedback of the non-available wheel speed sensor),
- an estimated load Lm_10 on the at least one axle and/or a load L_20 of the reference axle,
- when the at least one axle includes multiple axles, an average Lm_10 of the loads applied to all axles of the multiple axles divided by the load L_20 of the reference axle,
- a total weight, M_tot, of the vehicle (e.g. when available via a vehicle information system),
- a difference between a maximal load Lm_max_10 and a minimal load Lm_min_10 of the at least one axle divided by a difference between a maximal load L_max_20 and a minimal load L_min_20 of the reference axle, if the at least one axle includes multiple axles, the maximal load Lm_max_10 and the minimal load Lm_min_10 can again be respective mean values of all the multiple axles (the maximum/minimum loads may be available from a vehicle data sheet or through the vehicle information system),
- a lateral acceleration a_lat (e.g. obtained from an ESP),
- a friction coefficient determined by data derived from the reference axle (e.g., from an actuation of the ABS or traction control),
- a detection of an activated traction control on the reference axle and, if detected, ignoring a pressure value on the reference axle.

Concretely, the electronic controller may be configured to determine the estimate for the target pressure Pt as:

$$Pt = Pmin*F1*F2,$$

wherein:

Pmin is a pressure defined by a minimum of the brake pressures at each side of the reference axle (20),
F1 is a first correction factor that depends on a load estimate on the at least one axle relative to the reference axle, and
F2 is a second correction factor that depends on a lateral acceleration of the vehicle.

Optionally, the vehicle includes two (or more) driven axles and a two-channel EPM for providing brake pressures on the two driven axles. The electronic controller may then be configured to use as reference axle one of the driven axles. According to embodiments, the electronic controller may control the two-channel EPM. However, the two-channel EPM may also have its own controller or may be controlled by another controller.

Optionally, the at least one axle is a lift axle at which one or more of the following are not installed:

- a controlling by an antilock system,
- a wheel speed sensor,
- a load sensor.

If the at least one axle includes multiple axles, each or some of them may be a lift axle.

The vehicle may further comprise a steered front axle (or more than one), the at least one axle and the reference axle may be rear axles of the vehicle. Then, optionally, the brake system includes one or more of the following:

- a foot brake module to detect a brake actuation of a driver,
- a first air reservoir for the rear axles,
- a second air reservoir for the front axle,
- a one-channel EPM for brake cylinders on the front axle,
- one or more pressure control valves, PCV, at at least one of the axles of the vehicle (e.g. at the front axle),
- a two-channel EPM at at least one of the axles of the vehicle,
- an anti-lock system, ABS, controlling a first side of the front axle and a second side of the front axle.

Embodiments relate also to a vehicle, in particular to a commercial vehicle such as a tractor, a truck, a bus, a towing vehicle configured to couple to at least one trailer, with a brake system as described before.

Embodiments relate also to a method for estimating a target pressure for at least one axle of a vehicle without utilizing a wheel speed sensor for the at least one axle. The vehicle comprises a reference axle with an installed wheel speed sensor. The method includes:

- estimating the target pressure based on data associated with the reference axle; and
- controlling the target pressure at brake cylinders of the at least one axle by an electronic pressure module, EPM.

The at least one axle may comprise again multiple axels, wherein each of which may include a respective relay valve. Then, in the step of controlling all respective relay valves are controlled by the single EPM (e.g. with the same pressure). Again, the EPM may be a one-channel EPM or a two-channel EPM. Likewise, the control of the target pressure for a single axle may optionally utilize also a relay valve, even though it may not be needed (because the EPM provide sufficient pressurized air volume for the braking).

Some examples of the systems and/or methods will be described in the following by way of examples only, and with respect to the accompanying figures, in which:

Fig. 1    depicts a brake system according to an embodiment of the present invention.
Fig. 2    depicts further details of the brake system of a commercial vehicle according to embodiments.
Fig. 3    shows a schematic flow chart for a method of controlling a brake pressure on an axle without relying on wheel speed information according to embodiments.

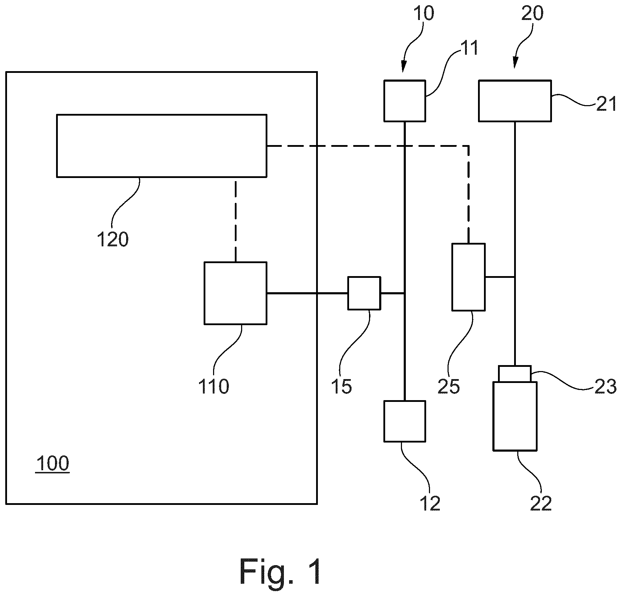

**Fig. 1** depicts a brake system 100 according to an embodiment. The brake system 100 is configured to be used within a commercial vehicle such as a truck, a towing vehicle, a vehicle combination (e.g. a tractor with a trailer), a bus etc. The commercial vehicle includes at least one axle 10 for which wheel-speed information is not available and a reference axle 20 for which wheel-speed information is available (e.g. having a sensor 23). The at least one axle 10 includes one or more brake cylinders 11, 12 and an optional relay valve 15 for providing a target (brake) pressure Pt to the brake cylinder(s) 11, 12 on both sides of the vehicle. The target pressure Pt provided by the relay valve 15 is set based on a received control pressure and using a supply pressure obtained from an air reservoir for pressurized air (not shown). If different braking pressures shall be applied on brake cylinders 11, 12 on both sides of the axle, additional pressure control valves, PCVs, may be utilized to lower the brake pressures on the respective wheel side (not shown in Fig. 1).

The brake system 100 according to embodiments comprises a one-channel electronic pressure module, EPM, 110, and an electronic controller 120. The one-channel EPM 110 includes one output 111 for controlling a (single) brake pressure on one axle. Via this output 111, the one-channel EPM 110 controls the relay valve 15 of the at least one axle 10 to provide the target pressure Pt. The electronic controller 120 is configured to control the one-channel EPM 110 based on an estimate for the target pressure Pt. The estimate is derived from data associated with the reference axle 20. The one-channel EPM 110 may be controlled electronically via a control line (dashed line) from the electronic controller 120 and/or may be controlled via a pneumatic line (not shown). This pneumatic line may be connected to a footbrake module to receive a pneumatic signal indicating an actuation by the driver. The foot brake module may further generate electronic brake signals which can be used by the electronic controller 120 for generating the electronic control signals.

The reference axle 20 may be a driven axle with brake cylinders 21, 22 which receives a brake pressure from another EPM 25 (associated with the reference axle 20). This reference axle 20 includes one or more wheel speed sensors 23 (e.g. on one or on both sides) and, optionally, further sensors such as load sensors. Thus, based on the sensor data, the brake pressure on this axle may be determined accurately. The electronic controller 120 may receive this information directly (see dashed line) or indirectly (through other electronic control units, ECUs). For example, the electronic controller 120 may be connected to a vehicle information system (e.g. via a CAN bus) to receive other relevant information for the estimate. If there are multiple driven axles, one of which (e.g. the first drive axle) may be defined as the reference axle 20.

The estimate for the target pressure Pt may be determined using one or more of the following inputs:

(1) The lower pressure Pmin on the left/right side of the reference axle 20 is taken (i.e. a select low pressure).

(2) This lower pressure Pmin may be weighted with the first correction factor F1 given by

$$F1 = Lm\_10/L\_20, \qquad\qquad (1)$$

wherein:

Lm_10 is an axle load (or a mean value if there are multiple axles 10) of the at least one axle 10, and
L_20 is the axle load of the reference axle 20.

The axle load Lm_10 of the at least one axle 10 can be estimated (possibly, the axle load cannot be measured). This estimation may relate particularly to vehicles without a trailer. For this, when the vehicle is not towing a trailer:

$$Lm\_10 = M\_tot - L\_20 - L\_steered - L\_further\_axles \; , \qquad (2)$$

wherein:

M_tot is a total mass of the vehicle (e.g. empty vehicle weight plus total load), L_steered is an estimated load for the steered axle (e.g. a certain percentage), and
L_further_axles is the (measured) load of further axles (if present).

Note, any further axle is assumed to be sensed. Otherwise, it may be counted as part of the at least one axle 10.

For a vehicle that tows a trailer, the first corrections factor F1 may be estimated as:

$$F1 = (Lm\_max\_10 - Lm\_min\_10)/(L\_max\_20 - L\_min\_20) \; , \qquad (3)$$

wherein:

Lm_max_10 is the mean value of the maximum loads of the at least one axle 10,
Lm_min_10 is the mean value of the minimum loads of the at least one axle 10,
L_max_20 is maximum axle load of the reference axle 20, and
L_min_20 is minimum axle load of the reference axle 20.

(3) This target pressure Pt may be subject to a second correction factor F2, which depends on the lateral acceleration a_lat and is intended to ensure the necessary cornering force when cornering sharply. The second correction factor F2 may read:

$$F2 = 1 \; , \text{ when a lateral acceleration is up to 1m/s}^2 \; . \qquad (4)$$

When the lateral acceleration is above that, the second correction factor F2 becomes:

$$F2 = 1 - 0.1*(a - 1) \qquad (5)$$

where a is the dimensionless lateral acceleration, i.e. the second correction factor F2 drops by 0.1 per 1m/s$^2$ of lateral acceleration of more than 1m/s$^2$. At a lateral acceleration of 5 m/s$^2$, the second correction factor F2 is therefore 0.6. At higher lateral accelerations, the second correction factor F2 may stay constant again or may decrease further.

(4) If an ABS actuation of the reference axle 20 is detected, the calculation under (1) to (3) is carried out with filtered pressures of the reference axis 20. The filter time constant may be 500 ms (or a value in range of 100 ms to 1s). The pressure in step (1) may be increased by 30% (to compensate for the pressure reduction caused by ABS). The filter may act as a low pass filter to cancel or to suppress high frequency pressure fluctuation that may occur during an ABS actuation.

The brake pressure is then applied as pulses to generate an open-loop ABS behavior. To do this, the brake pressure may be set to zero for a first time period (e.g. between 0.4 s to 1 s or for about 0.75 s) every second time period (e.g. every 1.5 s or every 1 s or every 3 s). It is understood that these values may be selected differently (more or less or at any intermediate value).

In summary, the target pressure Pt becomes:

$$Pt = Pmin*F1*F2 \qquad (6)$$

wherein, Pmin, F1 and F2 are derived from equations (1) to (5), and the ABS actuation on the reference axle 20 may be taken into account as set out under point (4).

According to embodiments, the values or parameters in the calculation in Eq. (6) can be adjusted to improve the result. The above example is only one exemplary choice.

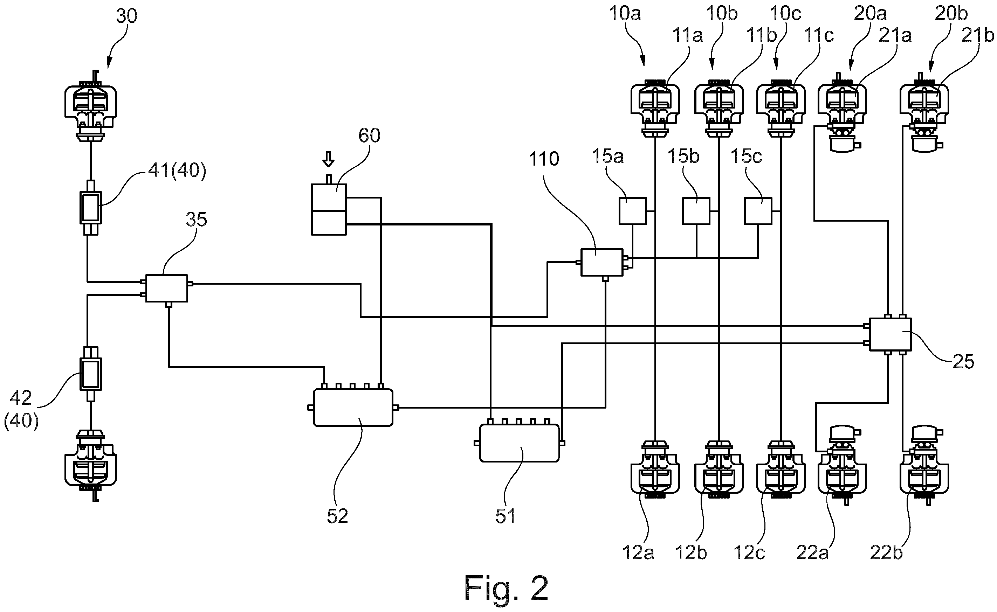

**Fig. 2** depicts further details of the brake system 100 of a commercial vehicle according to embodiments, wherein only the EPM 110 is depicted and the electronic control 120 can be implemented in various component. The depicted brake system 100 is for an exemplary commercial vehicle having a steered axle 30 (e.g. front axle), two driven axles 20a, 20b and three axles 10a, 10b, 10c, wherein **Fig. 2** shows only respective brake cylinders 11a, 11b, 11c, 12a, 12b, 12c (for three axles 10a, 10b, 10c) and brake cylinders 21a, 21b, 22a, 22b (for the two driven axles 20a, 20b). The driven axles 20a, 20b and the steered axle 30 may have access to wheel speed sensors that detect the speed of their wheels (not shown). However, the three axles 10a, 10b, 10c do not have access to a wheel speed sensor (they are not sensed or unsensed) and represent the at least one axle 10 mentioned before. Each of the three axles 10a, 10b, 10c includes a respective relay valve 15a, 15b, 15c. Each of the relay valves 15a, 15b, 15c has a (pneumatic) control input and an inlet for the supply pressure (not shown).

It is understood that the number of axles may be different. There may be more than one steered axle 30, more or less than two driven axles 20a, 20b, and more or less than three axles 10a, 10b, 10c without wheel speed sensors. Embodiments shall not be limited on the depicted example. Moreover, the driven axles 20a, 20b or one of them is utilized as reference axle 20, but the reference axle 20 may also be a non-driven axle.

The brake system 100 further comprises anti-lock systems, ABS, 40, which can be implement through pressure control valves, PCV, 41, 42. For example, the steered axle 30 includes a first PCV 41 and a second PCV 42 so that each side can be controlled independently. The first PCV 41 and second PCV 42 may provide the anti-lock function for the respective wheel. The brake system 100 may comprise further ABS units 40 or other assistance systems such as traction control systems (e.g. on the driven axle) which rely on wheel speed information.

The brake system 100 (the electronic controller 120 is not shown) further comprises various electronic pressure module, EPM, 25, 35, 110 (not shown in **Fig. 2**) which are configured to control a brake pressure on the respective axles. For example, a first one-channel EPM 35 is installed at the steered axle 30 and a second two-channel EPM 25 is installed for the driven axles 20a, 20b. According to embodiments, a second one-channel EPM 110 is installed to control the brake pressure on the axles 10a, 10b, 10c without wheel speed sensor information. The two-channel EPM 25 has four outputs, two for each (driven) axle (for the left-hand side and the right-hand side), an input for a control pressure, and an inlet for the pressure supply. The two channels can be controlled differently so that the brake pressure on each driven axle can set differently. The one-channel EPMs 35, 110 have two outputs (for the left-hand side and the right-hand side), an input for a control pressure, and an inlet for the pressure supply.

The brake system 100 further comprises a foot brake module 60 and two reservoirs 51, 52 for pressurized air supply. A first reservoir 51 provides pressure supply for the one-channel EPMs 35, 110 (i.e. for the steered axle 30 and the axles 10a, 10b, 10c) and a second reservoir 52 provides the pressure supply for the two-channel EPM 25 (i.e. for driven axles 20a, 20b). The foot brake module 60 may provide a control pressure to pneumatically control the one-channel EPMs 35, 110 and the two-channel EPM 25. Alternatively, or in addition, the one-channel EPMs 35, 110 and the two-channel EPM 25 may also be controlled electronically with an electronic control unit (not shown). For example, a driver may actuate the foot brake module 60 which may generate a respected pneumatic control signal and/or an electrical control signal which are (directly or indirectly) be provide to the EPMs 25, 35, 110 to generate corresponding brake pressures at the respective axles 10, 20, 30.

The brake system 100, according to embodiments, comprises (at least one) electronic controller 120 (not shown in Fig 2) which controls at least the one-channel EPM 110. According to embodiments, the EPMs 25, 35, 110 may also include respective controller circuitries to operate the module based on electronic signals. According to further embodiments, the electronic controller 120 may be one of electronic circuitries in the EPMs 25, 35, 110 or may be another, separate ECU.

According to the embodiments, all axles 10a, 10b, 10c without wheel speed information are controlled via the one-channel EPM 110 which provides in parallel control pressures to the control inputs of the relay valves 15a, 15b, 15c. Therefore, the one-channel output of the EPM 110 is connected to all three relay valves 15a, 15b, 15c to generate the brake pressure for brake cylinders 11a, 11b, 11c, 12a, 12b, 12c based on the provided, single, control pressure. This control pressure may be the target pressure Pt or may be used to generate the target pressure at the brake cylinders 11a, 11b, 11c, 12a, 12b, 12c and may be determined as set out in equations (1) to (6) above. Therefore, only one one-channel EPM 110 is utilized to apply a target pressure Pt on multiples axles which have no access to a wheel speed sensor.

Since no wheel speed sensors are available on the axle(s) 10a, 10b, 10c, the target brake pressure Pt may only be estimated. Eqs. (1) to (6) are only one possible estimate. More generally, several parameters may be taken into account differently for this estimate, wherein some of them are discussed in the following:
The target pressure Pt may be determined based on a brake pressure on at least one reference axle 20 which has access to a wheel speed sensor. Likewise, embodiments may detect and use a difference in left-right brake pressures on the reference axle 20. Since the axles 10a, 10b, 10c may not be equipped with left-right pressure control (e.g. through PCV), it is of advantage to consider only the minimum of both pressures (on the left/right-hand sides).

If there are multiple possible reference axles 20 (such as the driven axles 20a, 20b, 20c), one of them can be selected as reference axles 20 (e.g. the closest) for the determination of the target pressure Pt at the (unsensed) axle 10. However, embodiments may also use all brake pressures on the multiple axles 20a, 20b, 20c (e.g. by averaging them).

Likewise, embodiments may relate the pressure values to the loads on the respective axle to take into account a higher/lower load on the axle 10 compared to the reference axle(s) 20. The loads on the axles may also be estimated. For example, the total load may be known and, likewise, the arrangement of the axles may be known which may allow a reliable estimate. The total load may be estimated from the achieved acceleration of the vehicle for a given actuation of the accelerator (or during a braking).

Moreover, the wheel speed sensors on the reference axle 20 may be used to estimate the friction coefficient which, advantageously, can be considered in the determination of the target pressure Pt. Moreover, in case the vehicle moves through a curve, it is of advantage to determine the lateral acceleration a_lat acting on the vehicle, which may likewise further improve the estimate for the target pressure Pt.

Furthermore, driven axles often have a traction control unit (ASR). Results of this unit may indicate, e.g., a friction value and may thus be considered as well when determining the targe pressure Pt. Likewise, the traction control may apply directly a brake force on the respective axle, but this braking should not be used as a brake force on the unsensed axle(s) 10 - at least as long as they are not driven, which is very unlikely or not typically the case. Even if the unsensed axle 10 is driven, the same pressure will be applied on the left and right of the unsensed axle 10, whereas ASR only brakes one side at a time.

Furthermore, the availability of an antilock system, ABS, or an electronic stabilization program, ESP, or other assistance function can be taken into account when determining the target pressure Pt. If, however, antilock systems or ESP systems are not available, the pressure at the unsensed axles 10a, 10b, 10c should be - for safety reasons - a little bit less than a normal estimate would indicate. Hereby, an improved compromise between the deceleration and stability can be achieved, in particular, in comparison with the other axles.

The layout of Fig. 2 can be implemented on vehicles having 6 wheels (single or twin), four of which are driven (so-called 6x4 vehicle). In addition, or subsequently, three additional (lift) axles 10a, 10b, 10c may be installed (e.g. by an upfitter). These may be the axles 10a, 10b, 10c which are also braked by the one-channel EPM 110 that is also to be installed in the vehicle. As set out before, the three additional axles 10a, 10b, 10c do not have speed sensors or ABS valves. However, they are equipped with relay valves 15 from an axle manufacturer. Of course, this is only one option.

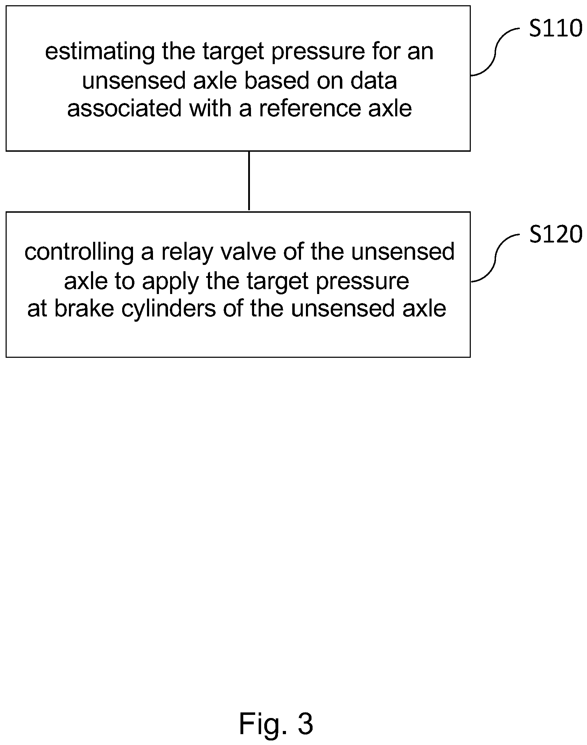

**Fig. 3** depicts a flow diagram of a method, according to an embodiment, for estimating a target pressure Pt for at least one axle 10 (unsensed axle) of a vehicle without utilizing a wheel speed sensor for the at least one axle 10, the vehicle comprises again a reference axle 20 with an installed wheel speed sensor 23. The method includes:

- estimating S110 the target pressure Pt for the unsensed axle 10 based on data associated with the reference axle 20; and
- controlling S120 an optional relay valve 15 of the unsensed axle 10 to apply the target pressure Pt at brake cylinders 11,12 of the unsensed axle 10, wherein the relay valve 15 is controlled by a one-channel control module, EPM, 110.

It is understood that all functions described before as part of the braking system can be implemented by further, optional, method steps.

Finally, important aspects of embodiments can be summarized as follows:

Embodiments enable a control of axles 10 (10a, 10b, 10c) without speed sensor(s) from a single-channel electronic pressure module 110 (EPM). The target pressure Pt controlled by the one-channel-EPM 110 is applied as braking pressure to one or more axles 10 (optionally using one or more relay valves 15) and is calculated based on data including on one or more of the following:

- the braking pressure of at least one speed-sensed reference axle 20; if there are multiple reference axles, these are advantageously linked (e.g., a mean value of the braking pressures can be set in relation to an axle load).
- the axle loads (estimated or measured) of one or more axles 10 that are controlled by the special pressure control module 110;
- the ratio of the axle load(s) of the unsensed axle(s) 10 to the axle load of a reference axle(s) 20;
- the utilized friction value, which may be determined by at least one axle with wheel speed sensors;
- the detection of how much braking is done in a curve or in straight ahead driving;
- the detection of whether and why a reference axle 20 has different brake pressure left/right (for example, one-sided traction control, ASR, brake pressure of the reference axle 20 should not lead to a braking of the unsensed axles - unless they are also driven which is unusual);
- the availability of ABS, ESP or other assistance functions (e.g., if no ABS or ESP is available, the brake pressure should be lowered a little to be on the safe side).

By implementing at least some or all of the above features in the calculation of the target pressure Pt, a significantly better compromise between deceleration and stability is achieved.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks may be provided through the use of dedicated hardware, such as "a signal processing unit", "a processor", "a controller", etc. as well as hardware capable of executing software in association with appropriate software. Moreover, any entity described herein as a "controller", may correspond to or be implemented as "one or more modules", "one or more controllers", "one or more units", etc. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

LIST OF REFERENCE SIGNS

| | |
|---|---|
| 10 | at least one axle (no wheel-speed information available) |
| 11,12 | brake cylinder(s) of at least one axle |
| 15 | relay valve(s) of at least one axle |
| 20 | reference axle(s) (with available wheel-speed information) |
| 21,22 | brake cylinders of the reference axle(s) |
| 23 | wheel speed sensor(s) |
| 25, 35 | pressure modulators |
| 30 | steered axle |
| 40, 41, 42 | pressure control valves, ABS function |
| 51, 52 | air reservoirs |
| 60 | foot brake module |
| 100 | brake system |
| 110 | one-channel or two-channel electronic pressure module (EPM) |
| 111 | one-channel output of one-channel EPM |
| 120 | electronic controller |
| Pt | target pressure |

**Claims**

**1.** A brake system (100) for a vehicle, the vehicle including at least one axle (10) for which wheel-speed information is not available and a reference axle (20) for which wheel-speed information is available, the at least one axle (10) includes brake cylinders (11, 12), the brake system (100) being
**characterized by:**

- an electronic pressure module, EPM, (110) with an output (111) configured to control a target pressure (Pt) at the at least one axle (10); and
- an electronic controller (120) configured control the one-channel EPM (110) based on an estimate for the target pressure (Pt), the estimate being derived from data associated with the reference axle (20).

2. The brake system (100) according to claim 1, wherein the EPM (110) includes one or more one-channel EPMs each having a one-channel output (111) as the output (111), or the EPM (110) is a two-channel EPM, wherein the output (111) is one of its two output channels.

3. The brake system (100) according to claim 1 or claim 2, the vehicle comprising a controllable relay valve (15) to provide the target pressure (Pt) to the brake cylinders (11, 12), wherein the output (111) of the EPM (110) is configured to control the relay valve (15).

4. The brake system (100) according to one of the preceding claims, wherein the at least one axle (10) includes multiple axles (10a, 10b, 10c), each of the multiple axles (10a, 10b, 10c) comprises a respective relay valve (15a, 15b, 15c) and associated brake cylinders (11a, 11b, 11c, 12a, 12b,12c),

wherein the EPM (110) is further configured to control each of the multiple relay valves (15a, 15b, 15c) through its one output channel (111), and
where the electronic controller (120) is further configured to determine the estimate based on a number of the multiple axles (10a, 10b, 10c).

5. The brake system (100) according to one of the preceding claims, the vehicle including a vehicle information system providing one or more of the following: brake pressures applied at some or all brake cylinders of the vehicle, a load, loads at axles, acceleration values, a status of anti-lock system, ABS, a status of a traction control, ASR, applied on the reference axle (20) or applied on another axle, and
the electronic controller (120) being further configured to obtain information from the vehicle information system and to use one or more of the following as data for the estimate of the target pressure Pt:

- a minimum of brake pressures, Pmin, applied at each side of the reference axle (20),
- an application of the ABS at the reference axle (20),
- if the ABS application is detected, utilized brake pressures from the reference axle (20) are filtered with a predefined time constant,
- if the ABS application is detected, utilized brake pressures at the reference axle (20) are increased by a predetermined factor and the estimated target pressure Pt is applied periodically to the at least one axle (10) to generate an open loop ABS actuation,
- an estimated load Lm_10 on the at least one axle (10) and a load L_20 of the reference axle (20),
- when the at least one axle (10) includes multiple axles, an average Lm_10 of loads applied to all axles of the multiple axles (10) divided by the load L_20 of the reference axle (20),
- a total weight, M_tot, of the vehicle,
- a difference between a maximal load Lm_max_10 and a minimal load Lm_min_10 of the at least one axle (10) divided by a difference between a maximal load L_max_20 and a minimal load L_min_20 of the reference axle (20), if the at least one axle (10) includes multiple axles, the maximal load Lm_max_10 and the minimal load Lm_min_10 are respective mean values of all the multiple axles,
- a lateral acceleration a_lat of the vehicle,
- a friction coefficient determined by data derived from the reference axle (20) or from another axle,
- a detection of an activated traction control on the reference axle (20) and, if detected, ignoring a pressure value on the reference axle (20).

6. The brake system (100) according to claim 5, the wherein the electronic controller (120) is configured to determine the estimate for the target pressure (Pt) as:

$$Pt = Pmin*F1*F2, \hspace{3cm} (6)$$

wherein:

Pmin is a pressure defined by the minimum of the brake pressures at each side of the reference axle (20),
F1 is a first correction factor that depends on a load estimate on the at least one axle (10) relative to the reference axle (20), and
F2 is a second correction factor that depends on a lateral acceleration of the vehicle.

7. The brake system (100) according to one of the preceding claims, wherein the vehicle includes two driven axles (20a, 20b) with a two-channel EPM (25) for providing brake pressures on the two driven axles (20a, 20b), the electronic controller (120) being further configured to use as reference axle (20) one of the driven axles (20a, 20b).

8. The brake system (100) according to one of the preceding claims, wherein the vehicle comprises an antilock system and the at least one axle (10) is/are a lift-axle(s) at which one or more of the following are not installed:

   - a controlling by the antilock system,
   - a wheel speed sensor,
   - a load sensor.

9. The brake system (100) according to one of the preceding claims, the vehicle further comprises a steered front axle (30), the at least one axle (10) and the reference axle (20) being a rear axle of the vehicle, the brake system (100) further including one or more of the following:

   - a foot brake module (60) to detect a brake actuation of a driver,
   - a first air reservoir (51) for the rear axles,
   - a second air reservoir (52) for the front axle,
   - an EPM (35) for brake cylinders on the front axle (30),
   - one or more pressure control valves, PCV, at at least one of the axles of the vehicle,
   - a two-channel EPM at at least one of the axles of the vehicle,
   - an anti-lock system, ABS, (40) controlling a first side of the front axle (30) and a second side of the front axle (30).

10. A vehicle, in particular a commercial vehicle configured to couple to at least one trailer, with a brake system (100) according to one of the preceding claims.

11. A method for estimating a target pressure (Pt) for at least one axle (10) of a vehicle without utilizing a wheel speed sensor for the at least one axle (10), the vehicle comprising a reference axle (20) with an installed wheel speed sensor (23), the method being **characterized by**:

   - estimating (S110) the target pressure (Pt) for the at least one axle (10) based on data associated with the reference axle (20); and
   - controlling (S120) the target pressure (Pt) at brake cylinders (11,12) of the at least one axle (10) by an electronic pressure module , EPM, (110).

12. The method according to claim 11, wherein the at least one axle (10) comprises multiple axels (10a, 10b, 10c), each of which including a respective relay valve (15a, 15b, 15c), and wherein in the step of controlling (S120) all respective relay valves (15a, 15b, 15c) are controlled by the single EPM (110).

Fig. 1

Fig. 2

estimating the target pressure for an
unsensed axle based on data
associated with a reference axle

S110

controlling a relay valve of the unsensed
axle to apply the target pressure
at brake cylinders of the unsensed axle

S120

Fig. 3

Europäisches
Patentamt

European
Patent Office

Office européen
des brevets

# EUROPEAN SEARCH REPORT

**Application Number**

EP 24 21 8681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2017 005501 A1 (WABCO GMBH [DE]) 13 December 2018 (2018-12-13) * abstract; claim 1; figure 1 * * paragraphs [0026] - [0031] * ----- | 1-12 | INV. B60T8/17 B60T8/1761 B60T8/1766 B60T8/90 |
| A | JP S59 192658 A (FUJITSU LTD) 1 November 1984 (1984-11-01) * abstract * ----- | 1-12 | |

**TECHNICAL FIELDS SEARCHED (IPC)**

B60T

The present search report has been drawn up for all claims

| Place of search | Date of completion of the search | Examiner |
|---|---|---|
| Munich | 30 April 2025 | Gaillard, Alain |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 21 8681

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | | Publication date |
|---|---|---|---|---|
| DE 102017005501 A1 | 13-12-2018 | CN | 110678367 A | 10-01-2020 |
| | | DE | 102017005501 A1 | 13-12-2018 |
| | | EP | 3634821 A1 | 15-04-2020 |
| | | US | 2020094799 A1 | 26-03-2020 |
| | | WO | 2018224216 A1 | 13-12-2018 |
| JP S59192658 A | 01-11-1984 | NONE | | |

EPO FORM P0459

For more details about this annex : see Official Journal of the European Patent Office, No. 12/82